## Europäisches Patentamt
## European Patent Office
## Office européen des brevets

(11) Publication number: **0 127 478**
**B1**

## EUROPEAN PATENT SPECIFICATION

(45) Date of publication of patent specification: **14.12.88**

(51) Int. Cl.⁴: **G 07 C 9/00,** G 06 K 9/00

(21) Application number: **84303602.1**

(22) Date of filing: **29.05.84**

(54) **Signature verification system.**

(30) Priority: **31.05.83 GB 8314889**

(43) Date of publication of application:
**05.12.84 Bulletin 84/49**

(45) Publication of the grant of the patent:
**14.12.88 Bulletin 88/50**

(84) Designated Contracting States:
**AT BE CH DE FR GB IT LI LU NL SE**

(56) References cited:
**EP-A-0 011 671**
**DE-A-2 509 015**
**DE-A-2 653 091**

(73) Proprietor: **ROCC Pattern Recognition Limited
Kelvin Way
Crawley, West Sussex (GB)**

(72) Inventor: **Etherington, Harry James
"Tallarna" Grosvenor Road
Godalming Surrey, GU7 1PA (GB)**
Inventor: **Joslin, Paul Carter
39 The Oaks
Bracknell Berkshire, RG12 2XG (GB)**
Inventor: **Stevenson, Timothy John
16 Gainsborough Drive Blythewood
Ascot Berkshire, SL5 8TH (GB)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

The present invention relates to a system for the verification of signatures by which term we mean to include all identifications marks written by individuals.

There have been many proposals for verifying signatures most of which have not been commercially successful for one reason or another but usually because there were not suitable for large scale implementation. Among these previous proposals has been one where a computer stores signals indicative of the variations in motion produced as one writes a signature. This is usually referred to as "dynamic". In order to verify a subsequent signature it is necessary to have the signals indicative of the variations in motion produced by the subsequent signature compared with the signal stored in the computer. Either the success in verifying the subsequent signature is so low at a first attempt at signing that a series of successive signing attempts are necessary or else it is necessary to employ complex correction algorithms and adaptive learning techniques requiring the apparatus to be directly connected to a host computer at the time of making the subsequent signature which is both inconvenient and expensive for general commercial use.

With cheque and credit card frauds amounting to many millions of pounds per annum in the U.K. alone there is a clear need to produce a system which will be called "static" in that the signature is verified by recognition of the form of the signature after it is written rather than verification by recognition of the manner in which the signature is written and which does not need connection to a computer and yet which will result in a reliable identification of a current signature as well as of a fraudulent signature.

A static system has been proposed in DE—A—2653091 as part of a method/apparatus for ensuring that signatures on carrier media such as credit cards cannot be altered without detection. In the DE—A—2653091 system a signed carrier medium is provided with a magnetic stripe. Data indicative of the presence or absence of ink at particular predetermined positions on the carrier medium is encoded and recorded in the magnetic stripe in locations bearing a predetermined spatial relationship to the respective positions on the carrier medium to which they relate. In this way if the signature is altered the predetermined spatial relationship between data in the magnetic stripe and ink on the carrier medium will no longer exist.

The verification device disclosed in DE—A—2653091 uses an optical scanner and a magnetic head to read signature data and magnetic stripe enclosed data from a carrier medium. The presence or absence of ink at the predetermined position on the carrier medium is determined from the optical scan information and this data is compared with the decoded magnetic stripe data. If the two sets of data match it is determined that the size, colour and disposition of the signature on the carrier medium have not been altered.

Another static system, in which an offered signature is compared with a code indicative of a true signature, is proposed in EP—A—11671. In this system the offered signature is scanned and the resulting signals are subjected to a predetermined position-invariant transform, such as a Fourier transform, followed by a further predetermined function such as the taking of a logarithm. These processed signals are in digital form and make up a black and white pixel pattern. The code with which the offered signature is to be compared in itself a black and white pixel pattern being the predetermined function of the position-invariant transform of the true signature. The two pixel patterns are compared and if the correspondence between them is greater than a present threshold the offered signature is considered to be a true signature.

The present invention provides a method for verifying an offered signature comprising the steps of

a) illuminating a predetermined area on a carrier medium where at least a portion of a reference signature is located,

b) scanning said predetermined area and producing first signals representing the at least a portion of a reference signature,

c) processing said first signals to derive second signals indicative of features of the scanned at least a portion of a reference signature, the processing step including the generating of a first black and white pixel pattern,

d) illuminating a predetermined area on a further carrier medium where at least a portion of an offered signature is located,

e) scanning the predetermined area on the further carrier medium and producing third signals representing the at least a portion of an offered signature,

f) processing said signals to derive fourth signals indicative of features of the scanned at least a portion of an offered signature, the processing step including the generating of a second black and white pixel pattern,

g) comparing the second and fourth signals, and

h) indicating the result of the comparison; characterised in that in each of the processing steps a black and white pixel representation of the scanned at least a portion of a signature is produced and subsequently subjected to analysis, wherein the analysis comprises the steps of

i) analysing each of a plurality of preselected features of the scanned signature by evaluating the number of pixels in the black and white pixel representation satisfying criteria associated with the respective feature, and

j) scaling each of said numbers of pixels to produce a measure value for each of said plurality of preselected features,

the measure values produced in respect of the reference signature being the second signals and

2

the measure values produced in respect of the offered signature being the fourth signals.

Preferably, a number of sample signatures are scanned and the resultant code is a function of all the signatures so as to take into account legitimate variations in the signature.

The present invention further provides a method for verifying an offered signature on a carrier medium by comparison with a code, said method comprising the steps of

a) illuminating a predetermined area on the carrier medium where at least a portion of an offered signature is located,

b) scanning said predetermined area and producing first signals representing the at least a portion of an offered signature,

c) processing said first signals to derived second signals indicative of features of the scanned at least a portion of an offered signature, the processing step including the generating of a black and white pixel pattern,

d) inputting a code indicative of a true signature,

e) generating third signals from said input code,

f) comparing the second signals with said third signals, and

g) indicating the result of the comparison; characterised in that in the processing step a black and white pixel representation of the scanned at least a portion of the offered signature is produced and subsequently subjected to analysis, wherein the analysis comprises the steps of

h) analysing each of a plurality of preselected features of the scanned signature by evaluating the number of pixels in the black and white pixel representation satisfying criteria associated with the respective feature, and

i) scaling each of said numbers of pixels to produce a measure value for each of said plurality of preselected features,

the measure values being said second signals, and in that the third signals are measured values derived by analysis of the true signature.

Preferably, the same array of elements is used as both the means for reading the code and for reading the signature, in which case it is convenient if the signature and the code are read sequentially.

Using the above system, the verification apparatus need not be connected to a computer and can be a "stand alone" device since the record medium bears the code which described the true signature and thus does not require a computer signature data-base. Advantageously, when dealing with banking debit vouchers e.g. cheques, the verification apparatus is provided with a transport mechanism for feeding a cheque past a sensing head for reading the code and the submitted signature. The transport mechanism may be constructed as described in out co-pending U.K. application No. 8314890 filed simultaneously with the present application.

Features and advantages of the present invention will become apparent from the following description of an embodiment thereof when taken in conjunction with the accompanying drawings in which:—

Figure 1 shows schematically verification apparatus according to the present invention;

Figure 2 shows diagrammatically how a cheque is scanned by the apparatus in Figure 1;

Figures 3A and 3B show a block schematic circuit diagram of the computer used in the verification apparatus shown in Figure 1;

Figure 4 shows a detailed circuit diagram of a part of the circuit diagram shown in Figure 1;

Figures 5A and 5B show a flow diagram of the software used by a computer used in Figure 1; and

Figure 6 shows a further flow diagram for explaining in more detail a part of the software.

The overall system includes encoding apparatus and verification apparatus. In this case, it is more convenient to describe first the verification apparatus and its use and then to describe the encoding apparatus.

The verification apparatus is designed to verify the validity of signatures by comparison of a number of measures predetermined by scanning the signature, with a similar set of 'standard measures' previously determined by scanning one or more genuine signatures. Typically, a cheque is a signature box defined within which the signature, is required to be written preceded by one or more codes, which in the present example are in the form of a block of numbers. Each block of numbers is representative of the 'standard measures' determined previously but in encrypted form. More than one code allows for alternative signatures to be accommodated.

A scanning system is provided which scans both the signature and the or each code. The information provided by the scanning system is converted into digital form ready for processing by a microcomputer system.

The software with which the microcomputer operates performs three main tasks:

(a) It decodes the or each code back to a set of "standard measures";

(b) It takes the data representing the pattern of the signature and generates a set of measures which, after suitable scaling, correspond to those that make up the set of "standard measures"; and

(c) It compares each scaled signature measure with its equivalent standard measure and generates an overall figure of merit as a measure of their similarity.

Thereafter, the figure of merit is matched with previously determined values to indicate the result of the comparison e.g. by a visual indication such as a simple pass or fail light or by an actual display of the figure of merit either alone or with the predetermined values thereby to allow the user to decide whether or not to accept a signature.

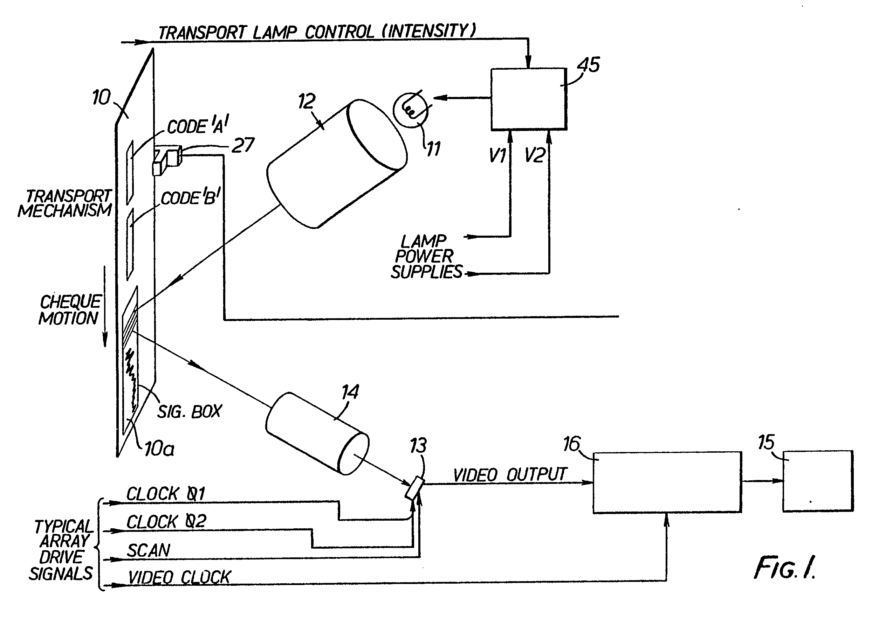

Turning now to Figure 1, a cheque 10 is moved at a constant velocity through a scanning location by a transport system such as the one disclosed in our co-pending U.K. patent application No. 8314890 filed simultaneously with the present application. At the scanning location, a small area of the cheque 10 is illuminated by a light source 11 through an optical assembly 12 and the light reflected from the surface of the cheque detected by a linear array of a plurality of photosensitive elements 13 after passing through an optical assembly 14 which is arranged to focus the light from the small area of the surface of the cheque on to the array.

The small area is just large enough to encompass the height of a signature box 10a and the height of the code is chosen to be not greater than this height of signature box. The optical assembly 14 places a magnified image of the area of the cheque being scanned on the array 13 and incorporates filters which permit use of a wide range of colours for the inks with which the submitted signature is written.

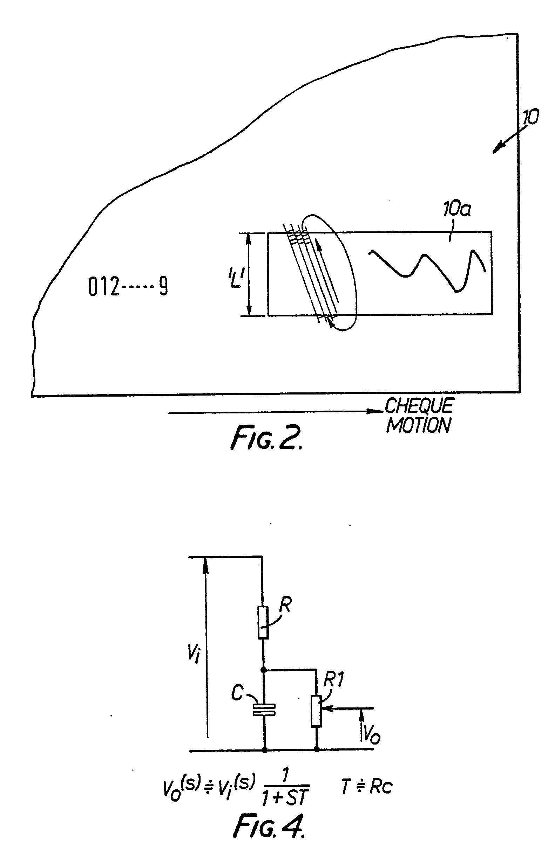

As cheques pass through the scanning location, the array of 13 of photosensitive elements are repeatedly sequentially scanned in one direction as indicated in Figure 2. The velocity of the cheque 10 is so chosen that in one scan of the array 13 the cheque 10 moves through a distance equivalent to nominally one array element width. Thus a strip of a height equivalent to the height of the signature box 10a of the cheque 10 is scanned from one end of the cheque 10 to the other during its passage through the transport.

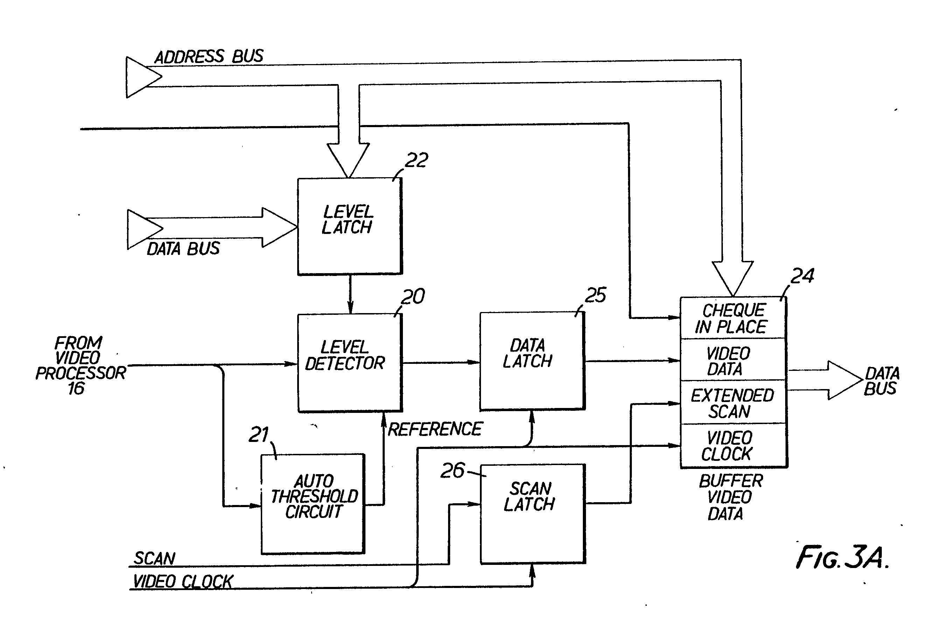

A video output signal is derived from the array 13 as a result of each sequential scan of the array elements and is therefore serial in nature. A SCAN PULSE and CLOCK PULSES Ø1 and Ø2 are generated by a computer 15 and fed to the array 13. The SCAN PULSE initiates each scan of the array and is also fed to other parts of the apparatus, as will be described in detail in relation to Figure 3A to demarcate each scan within the software of the computer. The video output is thus in the form of a succession of packets of charge each being a measure of the integral of the light energy which has fallen on a particular array element during one scan period. The video signal is fed to a video signal processor 16 where the packets of charge are processed to provide a continuous analogue signal for each scan. To this end, a VIDEO CLOCK signal is fed to the processor 16 from the computer 15.

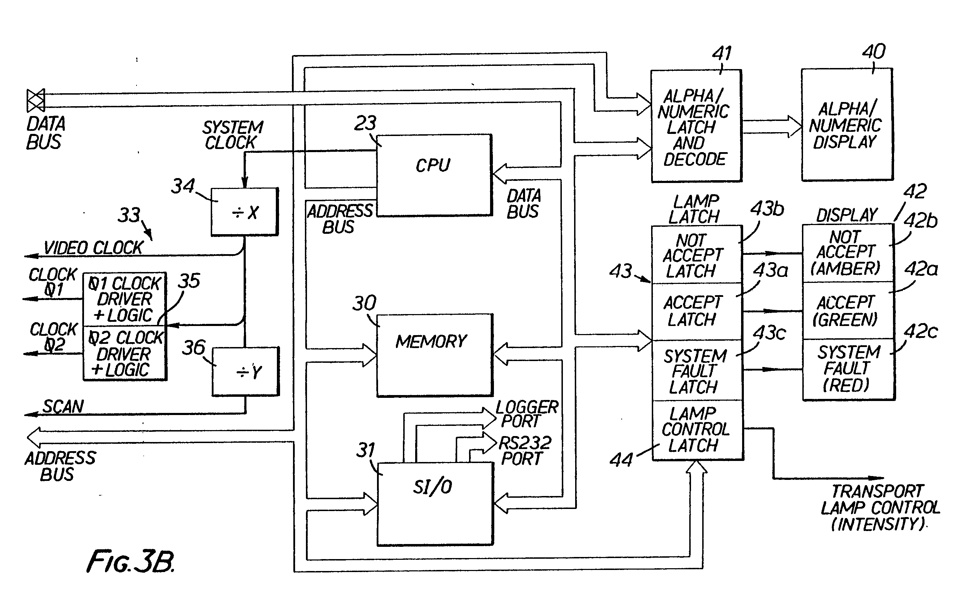

Turning now to Figures 3A and 3B, these show schematically how the computer 15 is arranged. The video signal processor 16 generates a continuous analogue video output which is fed to a level detector 20 and to the auto-threshold circuit 21 which are used to digitise the analogue output. The analogue video output is defined as being black or white dependent upon whether it is greater or less than a reference level fed to the level detector 20 from the auto-threshold circuit 21.

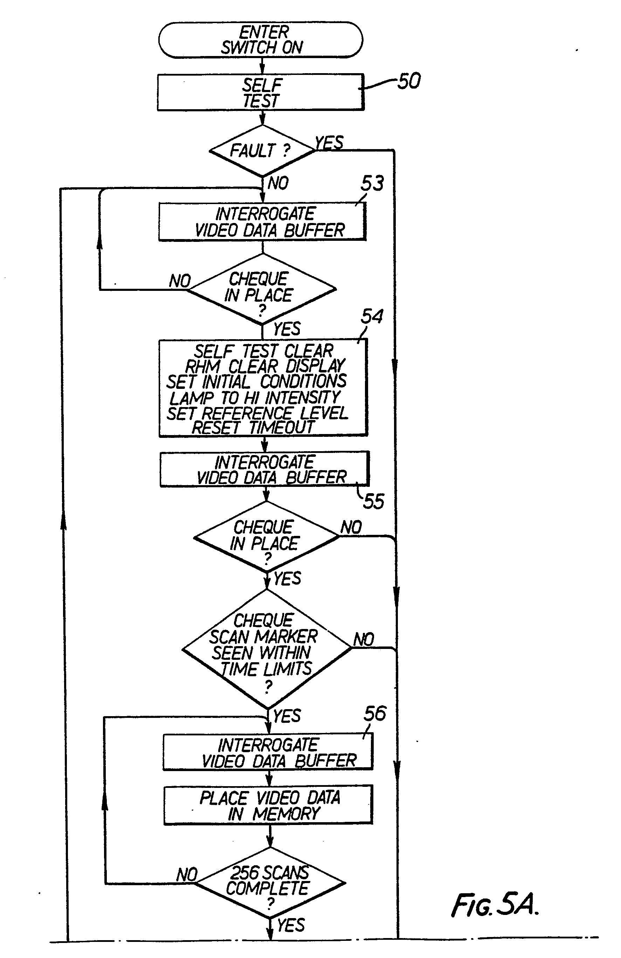

It is desirable that the reference level be related to the video signal in such a way that it responds to long term changes in the level of the video signal brought about by such things as variations in lamp intensity, cheque background reflectivity etc., in a proportional manner. It should be insensitive however to rapid changes in video signals which occur as the signature or the code is being scanned. To achieve this "auto threshold" characteristics, the circuit 21 is seen from Figure 4 to comprise a simple integrator circuit combination of a resistance R and a capacitance C across which the input analogue video signal is placed. The junction between the resistance R and the capacitance C is connected to one end of a further resistance R1 connected in parallel with the capacitance C. A scaled output $V_0$ is derived from the resistance R1. The time constant of the integrator circuit is chosen so that the break point frequency is below the scan frequency making the DC component of the signal dominant with a decreasing AC contribution with increasing frequency.

To optimise the ability of the equipment to provide accurate data from the information being scanned on the cheque, the reference level derived from the circuit 21 applied to the level detector 20 can be changed by means of an output from a level latch 22 under software control. The contents of the latch 22 are set by a data bus from a CPU 23 (Figure 3B).

The output from the level detector 20 is a "digital" signal which is made available to the micro-computer system via a video data buffer 24 after having passed through a data latch 25 which is repeatedly re-latched at the commencement of each video clock period by the VIDEO CLOCK signal derived from the clock signal generator of the micro-computer. The video data buffer 24 is provided with a number of control signals which are used to validate the data present to its from the data latch 25. Firstly, an extended SCAN pulse is provided to the buffer 24 from a scan latch 26 which has, as inputs, the SCAN pulse and the VIDEO CLOCK pulse generated by the clock signal generator of the micro-computer system. The output of the scan latch 26 is an extended SCAN pulse which is latched for one VIDEO CLOCK period. The VIDEO CLOCK signal is also fed directly to the buffer 24. Additionally, an indication of whether or not a cheque is in place in the scanning location of the transport system is generated by a detector 27 (Figure 1) and fed as an enable signal to the buffer 24.

The buffer 24 is addressed by the micro-computer via an address bus and its data content is loaded onto a data bus for further processing by the micro-computer system. The video data buffer input is updated continuously as a cheque passes through the transport. The software is designed to poll asynchronously the information present in the video data buffer 24 at a rate which ensures any changes in the video data are seen by the micro-computer.

Turning now to Figure 3B, this shows in more detail the structure of the micro-computer system as well as the details of the clock signal generator circuit and the indication circuitry for providing an indication of whether a signature is valid or not. It will be seen that the micro computer system is made up of three main elements namely a CPU 23 for carrying out data processing, a memory 30 to provide storage for the operating system plus all the data derived from scanning a cheque, and an input/output section 31 to provide an RS 232 interface plus a logger interface for data acquisition.

The clock signal generator circuitry which is indicated generally by the reference numeral 33 operates on the micro-computer system clock signal generated by the CPU 23 which is divided down in a divider circuit 34 by value X to provide the VIDEO CLOCK signal which is used as already described in relation to Figure 3A. The frequency of the VIDEO CLOCK signal has a period which is to equal one array element interrogation period. This signal is split by additional logic 35 to provide a two-phase CLOCK SIGNAL clock Ø1 and clock Ø2 required to scan the array. To provide the SCAN pulse to initiate each array scan further sub-division of the video clock signal by a value Y is carried out by a divider circuit 36, the value of Y is equal to the number of elements in the array.

The micro-computer system further includes indicator circuitry for indicating whether or not a signature is valid. In Figure 3B, two types of display are shown but is to be understood that in certain circumstances only one type of display may be required.

The first type of display is a multiple character alpha/numeric display 40. This display is driven by decoding logic circuit 41 which accepts data from the data bus, suitably decodes it, and then presents it to the display in a latched form. Information presented may take the form of data and/or actual decisions.

A simple lamp display 42 can also be provided. In this embodiment there are three lamps, namely:—

(1) An "accept" lamp 42a indicating when the overall figure of merit is acceptable;

(2) A "cannot confirm" lamp 42b indicating when the value of the figure of merit is not within the acceptable range; and

(3) A "system fault" lamp 42c indicating a system irregularity e.g. a fault or mal-operation of the equipment.

Each of these lamps is driven by its own respective latch 43 each connected to the data bus.

A latch 44 connected to the data bus when addressed by the CPU generates a control signal which is sent to a switching circuit 45 (Figure 1) for controlling the intensity of the light source for the scanning system.

This circuit enables the verification apparatus to operate with minimum power dissipation and also extends the life of the light source 11 since extended life can be achieved by keeping the light source 11 energised at a reduced voltage when the apparatus is in the "idle" mode awaiting a further verification procedure. The supply switch 45 is provided with a dual voltage supply V1, V2 and switches between the dual voltage supplies under the control of the signal generated from the latch 44 shown in Figure 3B. When the "cheque in place" signal from the detector 27 is generated the latch 44 is set by the CPU 23 this controls the switch 45 such that the full voltage V2 is applied to the lamp. Where there is no "cheque in place" signal the reduced voltage V1 is applied to the lamp. The mechanical position of the detector 27 is chosen so that there is a sufficient lead time to enable the light source to achieve full luminosity before cheque scanning commences. The micro-computer system is designed to respond to the "cheque in place" signal going false by re-setting the lamp voltage to its reduced value V1 after a delay which allows the cheque to clear the transport system.

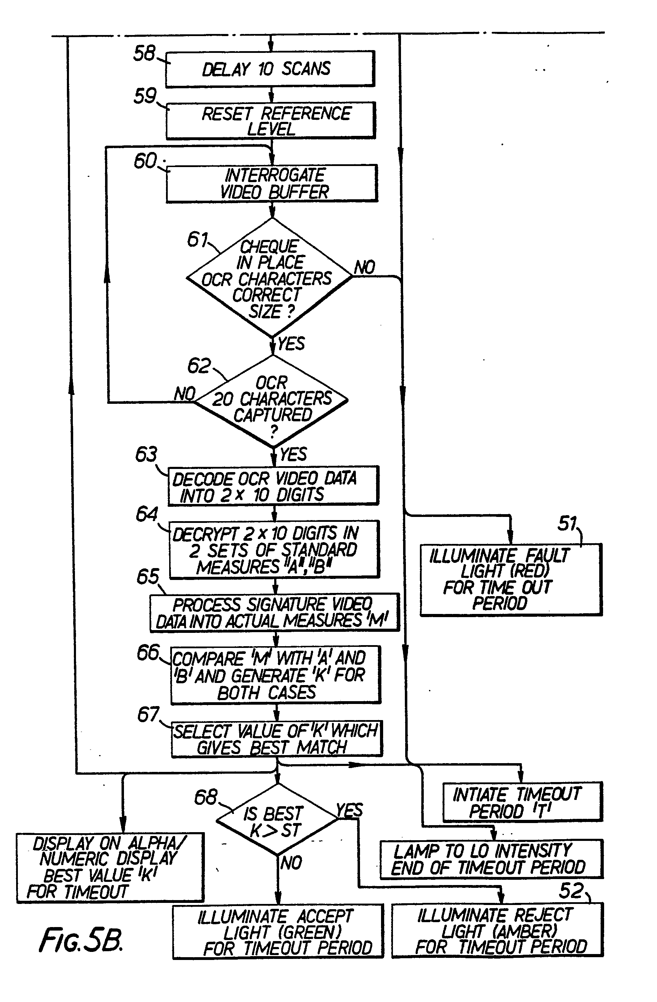

In order to provide a better understanding of the operation of the micro-computer system, attention is now directed to Figures 5A and 5B which together make up the flow diagram of the software for the micro-computer. Figures 5A and 5B will be used as the basis for a description of how the apparatus operates to carry out the verification process.

On switching on the apparatus, the micro computer conducts a "self test" routine as indicated by the block 50 and if a fault is found a signal is fed to the system fault latch 43c so as to illuminate the system fault display lamp as indicated by the block 51. Simultaneously, a further signal is sent to the lamp control latch 44 to ensure that the light source 11 is energised at a reduced voltage as indicated by the block 52 in Figure 5B.

If the self test routine is satisfactory, the micro computer then interrogates the video data buffer 24 as indicated by the block 53 and firstly determines whether or not the buffer 24 contains a "cheque in place" signal. If it does not, the micro-computer system continues to interrogate the video data buffer 24 until such time as a "cheque in place" signal is present in the buffer whereupon the processor moves on to a further more extensive routine as indicated by the block 54 where the processor again conducts a self test routine, clears the memory 30, clears the display 40 and/or 42, sets all necessary initial conditions required by the apparatus, sends a signal to the lamp control latch 44 in order to energise the light source 11 from the high voltage line V2, sets the contents of the level latch 22 which is used in the digitising apparatus and also re-sets a timing circuit which sets the overall time within which a signature verification process may take place. Once all these steps have been taken the video data buffer 24 is again interrogated as indicated by the block 55 and once more the buffer 24 is interrogated to ensure that there is a "cheque in place" signal in the buffer 24. If there is not, this indicates a fault condition which again is used to indicate a fault condition as shown by the block 51 and to reset the lamp to a lower intensity as indicated by the block 52. If, however, there is still a "cheque in place" signal the micro processor now interrogates the buffer 24 to ensure that the VIDEO CLOCK and extended SCAN signals contained therein are present within the necessary time limits. If they are not, then again a fault is indicated and the lamp is switched to low intensity at the end of the time out period. If, as is usual, these signals are present then the buffer 24 is again interrogated as indicated by the block 56 and the data contained therein is fed to the memory 30 via the data bus.

This operation of interrogating the buffer 24 and placing the data contained therein into memory is conducted cyclically until a predetermined number of scans has been completed. The number of scans is determined by the length of the area of the cheque 10 being scanned relative to the distance travelled by the cheque during each scan. In this case, it has been determined that 256 scans will completely scan the whole of the signature box and once these scans have been completed and the signature data loaded into memory the processor moves on to conduct the scanning of the codes and this will be described in more detail in relation to Figure 5B.

After conducting the 256 scans of the signature box, the processor delays the next 10 scans as indicated by the block 58 and then, as indicated in block 59 resets the reference level of the digitising circuitry ready for the scanning of the code or codes. Once this has been done, the video data buffer 24 is again interrogated as indicated by the block 60 to ensure that the cheque is still in place. If it is not then once more the fault is indicated using the block 51 and the intensity of the light sources is again reduced as indicated by the block 52. Further, it is assumed in this case that the code is in the form of OCR characters in which case there is a predetermined video data output which indicates whether or not the characters are of the correct size. The processor therefore as indicated by the decision block 61 interrogates the video data contained in the buffer 24 to see if OCR characters of the correct size are being used and if so it then proceeds to load the data representing the OCR characters into the memory 30. As indicated by the decision block 62, once a predetermined number of OCR characters have been captured in this way the programme moves on. In the present example it is assumed that there are two codes each of ten OCR characters and therefore the micro-computer will continue to interrogate the video data buffer 24 until 20 OCR characters have been captured. Once this has been done the scanning operation is complete and the micro processor then moves into a decoding and decision making routine indicated by the blocks 63 to 68.

Firstly, the data representing the 20 OCR characters are decoded into the two ten character codes as indicated by the block 63 and then the or each code is decrypted into a set of "standard measures" by the block 64 and the results of these standard measures are stored in the memory 30. The processor then processes the signature video data produced by the 256 scans to produce equivalent actual measures for the actual signature in the block 65 and then compares the actual measures with the or each standard measures which have been previously stored and generates, in the block 66 a figure of merit which defines the degree of similarity between the "standard measures" and the measures actually determined from the signature.

On the assumption that there are two or more codes present, the processor then selects the value of the figure of merit which gives the best match with one of those codes in the block 67 and produces an output indicative thereof to a decision block 68 where the best figure of merit value is compared with a predetermined standard value. If the figure of merit value is greater than the standard value a signal is fed to the not accept latch 43B in order to illuminate the "not accept" lamp 42B. If the figure of merit value is less than the standard value then a signal is fed to the accept latch 43A in order to illuminate the accept lamp 42A.

If desired it is also possible to alternatively or additionally display the actual figure of merit value via the decoder and latch 41 and the display 40.

The above apparatus is thus a simple piece of apparatus which has no operator controls other than an on/off switch and uses a normal single phase AC power supply. In tests, it has been shown that the apparatus will detect virtually 100% of unseen forgeries. An unseen forgery is where a person writes another person's signature in his own hand. Further, seen forgeries have been detected 95% of the time. A seen forgery is where a person copies another person's signature e.g. from the cheque card or credit card. The apparatus is in fact capable of detecting virtually 100% of even seen forgeries using more expensive but available high resolution scanning technology but unfortunately this also results in a increase in the number of rejections of slight imperfect true signatures and for economic as well as commercial purposes it is thought unnecessary to attempt to obtain the final 5% seen forgery detections.

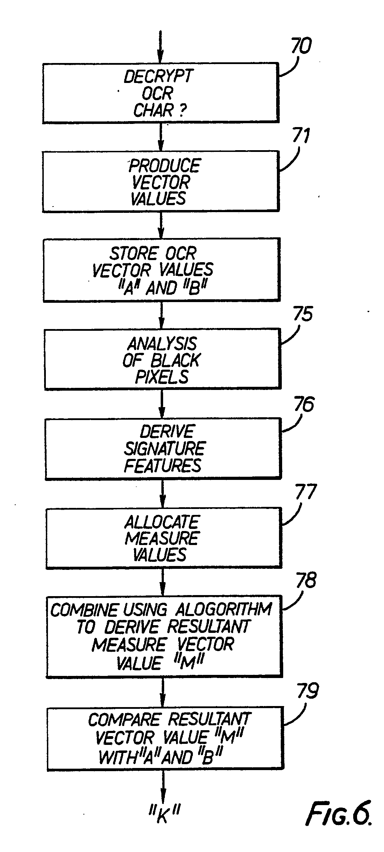

Turning now to Figure 6, this shows in more detail how blocks 64, 65 and 66 of Figure 5B processes data to produce the factor "K". Dealing firstly with block 64 which decrypts each OCR code read from the cheque, the encrypted signature record code is initially processed to decrypt the code as indicated by the block 70, the decrypted code is then subjected to an algorithm in the block 71 to produce a vector value for each signature record code which is stored for comparison with a vector value derived from the offered signature as will now be described.

The video data representing a signature is processed by initially analysing the total pixel pattern represented by the data stored in the memory 30 and particularly the block pixels as indicated in the block 75 which represent the line of the signature. From this analysis various signature features are derived in the block 76. The features are related to:

a) the total ink line forming the signature;
b) the vertical strokes forming the signature;
c) the horizontal strokes forming the signature;

d) the direction of the slopes forming the signature;

e) the complexity of the signature; and

f) the size and disposition of the signature having regard to the signature box.

Thereafter, the features are allocated measure values on a suitable scale e.g. of 10 as indicated by the block 77 and then combined using an algorithm as indicated by the block 78 to produce a resultant measure vector value for comparison with the or each stored vector value derived from the code read from the cheque. The comparison in block 79 produces the factor "K" which is an indication of the distance apart of the two vector values representing the offered signature and the signature record code relative to a predetermined threshold.

From the above description, it will be apparent that the encoder device required in order to provide a cheque or credit card with the signature record code indicative of the tgue signature is very similar to the above arrangement in that the encoding apparatus will require all the scanning and video processing apparatus described above. The software for the micro-computer will differ in so far as it will only deal with the scanning of the mutual signature and the storing of the video data from 256 scans in the equivalent of the memory 30. In other words it will operate substantially identically to the description given for Figure 5A. However, after the data from the 256 scans has been completed, the processor will then move to the equivalent of block 65 in Figure 5B where it will process the actual signature into an actual measures value which will then be encoded into a 10 character ORC code which can then be printed on a cheque or credit card or embossed on a credit card of otherwise recorded thereon.

When dealing with cheque and credit card fraud, it will be appreciated that the above disclosed apparatus is of significant commercial value due to the fact that the encoding apparatus can be retained by the banks or credit card companies while the verification apparatus need not be connected in any way to the issuing banks or credit card companies since it is a "stand alone" device. A further significant advantage is the relatively low cost of the verification apparatus which will encourage its wide spread use.

The above description has been given on the basis that the verification apparatus has available to it from the cheque or credit card the code indicative to the true signature. It is within the scope of this invention for the verification apparatus to be connected on line to a host central computer which stores the code.

As a modification, it is possible to replace the reflected light technique described above by a transmitted light technique.

## Claims

1. A method for verifying an offered signature comprising the steps of

a) illuminating a predetermined area on a carrier medium where at least a portion of a reference signature is located,

b) scanning said predetermined area and producing first signals representing the at least a portion of a reference signature,

c) processing said first signals to derive second signals indicative of features of the scanned at least a portion of a reference signature, the processing step including the generating of a first black and white pixel pattern,

d) illuminating a predetermined area on a further carrier medium where at least a portion of an offered signature is located,

e) scanning the predetermined area on the further carrier medium and producing third signals representing the at least a portion of an offered signature,

f) processing said signals to derive fourth signals indicative of features of the scanned at least a portion of an offered signature, the processing step including the generating of a second black and white pixel pattern,

g) comparing the second and the fourth signals, and

h) indicating the result of the comparison;

characterised in that in each of the processing steps a black and white pixel representation of the scanned at least a portion of a signature is produced and subsequently subjected to analysis, wherein the analysis comprises the steps of

i) analysing each of a plurality of preselected features of the scanned signature by evaluating the number of pixels in the black and white pixel representation satisfying criteria associated with the respective feature, and

j) scaling each of said numbers of pixels to produce a measure value for each of said plurality of preselected features,

the measure values produced in respect of the reference signature being the second signals and the measure values produced in respect of the offered signature being the fourth signals.

2. A method according to claim 1, and further comprising the steps producing an encrypted version of the measure values representing the reference signature, recording the encrypted version of the reference measure values on a record medium in a machine readable form, reading the encrypted version of the reference measure values from the record medium, and decrypting the encrypted version to generate the measure values representing the reference signature.

3. A method according to claim 2, wherein the record medium is selected from a banking debit voucher, a cheque, a bank card and a credit card.

4. A method according to claim 2, wherein the record medium constitutes the further carrier medium.

5. A method according to any previous claim wherein one of said plurality of preselected features is the total length of ink line of the signature within the predetermined area.

6. A method according to claim 5, wherein in the analysing step at least one of said evaluated numbers of pixels is normalised in relation to the number of pixels satisfying criteria associated with the total length of ink line feature.

7. A method according to any previous claim wherein at least one of said preselected features is a ratio of numbers of pixels in the black and white pixel representation satisfying different criteria.

8. A method for verifying an offered signature on a carrier medium by comparison with a code, said method comprising the steps of

a) illuminating a predetermined area on the carrier medium where at least a portion of an offered signature is located,

b) scanning said predetermined area and producing first signals representing the at least a portion of an offered signature,

c) processing said first signals to derive second signals indicative of features of the scanned at least a portion of an offered signature, the processing step including the generating of a black and white pixel pattern,

d) inputting a code indicative of a true signature,

e) generating third signals from said input code,

f) comparing the second signals with said third signals, and

g) indicating the result of the comparison;

characterised in that in the processing step a black and white pixel representation of the scanned at least a portion of the offered signature is produced and subsequently subjected to analysis, wherein the analysis comprises the steps of

h) analysing each of a plurality of preselected features of the scanned signature by evaluating the number of pixels in the black and white pixel representation satisfying criteria associated with the respective feature, and

i) scaling each of said numbers of pixels to produce a measure value for each of said plurality of preselected features,

the measure values being said second signals, and in that the third signals are measure values derived by analysis of the true signature.

9. A method according to claim 8 wherein the carrier medium bears a machine readable code representing the true signature and the inputting step comprises further scanning the carrier medium to produce signals representing the code.

10. A method according to claim 9 wherein a plurality of machine readable codes are located on the carrier medium, the scanning step comprises producing signals representing each of the codes, and the generating step comprises generating third signals and fourth signals being respective measure values for each of the codes, and the comparing step comprises comparing the second signals with both the third signals and the fourth signals.

11. A method according to claim 10 wherein the scanning steps comprise passing the carrier medium past a single scanning means whereby to sequentially scan the offered signature and the plurality of codes.

12. A method according to claim 8 wherein one of said plurality of preselected features is the total length of ink line of the signature within the predetermined area.

13. A method according to claim 12 wherein in the analysing step at least one of said numbers of pixels is normalised in relation to the number of pixels satisfying criteria associated with the total length of ink line feature.

14. A method according to claim 8 wherein at least one of said preselected features is a ratio of number of pixels in the black and white pixel representation satisfying different criteria.

**Patentansprüche**

1. Verfahren zum Prüfen einer angebotenen Unterschrift, enthaltend die folgenden Schritte:

a) Beleuchten einer vorbestimmten Fläche auf einem Trägermedium, wo wenigstens ein Teil einer Bezugsunterschrift angeordnet ist,

b) Abtasten der vorbestimmten Fläche und Erzeugen erster Signale, die den wenigstens einen Teil einer Bezugsunterschrift repräsentieren,

c) Verarbeiten der genannten ersten Signale, um zweite Signale abzuleiten, die für Merkmale des abgetasteten wenigstens einen Abschnitts einer Bezugsunterschrift kennzeichnend sind, wobei der Verarbeitungsschritt das Erzeugen eines ersten Schwarz/Weiß-Pixelmusters enthält,

d) Beleuchten einer vorbestimmten Fläche eines weiteren Trägermediums, wo wenigstens ein Abschnitt einer angebotenen Unterschrift angeordnet ist,

e) Abtasten der vorbestimmten Fläche auf dem weiteren Trägermedium und Erzeugen dritter Signale, die den wenigstens einen Abschnitt einer angebotenen Unterschrift repräsentieren,

f) Verarbeiten der genannten Signale, um vierte Signale abzuleiten, die für Kennzeichen des abgetasteten wenigstens einen Abschnitts einer angebotenen Unterschrift kennzeichnend sind, wobei der Verarbeitungsschritt das Erzeugen eines zweiten Schwarz/Weiß-Pixelmusters enthält,

g) Vergleichen der zweiten und vierten Signale, und

h) Anzeigen des Vergleichsergebnisses,

dadurch gekennzeichnet, daß in jedem der Verarbeitungsschritte eine Schwarz/Weiß-Pixeldarstellung des abgetasteten wenigstens einen Abschnitts einer Unterschrift erzeugt und anschließend einer Analyse unterworfen wird, wobei die Analyse die folgenden Schritte enthält:

i) Analysieren eines jeden aus einer Mehrzahl vorgewählter Kennzeichen der abgetasteten Unterschrift durch Auswerten der Anzahl der Pixel in der Schwarz/Weiß-Pixeldarstellung, die Kriterien befriedigen, die dem entsprechenden Merkmal zugeordnet sind, und

j) Skalieren einer jeden der genannten Anzahl Pixel, um einen Meßwert für jedes der vorgewählten Kennzeichen zu erzeugen,

wobei die in bezug auf die Bezugsunterschrift erzeugten Meßwerte die zweiten Signale sind und die in bezug auf die angebotene Unterschrift erzeugten Meßwerte die vierten Signale sind.

2. Verfahren nach Anspruch 1, weiterhin enthaltend die Schritte: Erzeugen einer verschlüsselten Version der Meßwerte, die die Bezugsunterschrift darstellen, Aufzeichnen der verschlüsselten Version der Bezugsmeßwerte auf einem Aufzeichnungsmedium in einer maschinenlesbaren Form, Ablesen der verschlüsselten Version der Bezugsmeßwerte von dem Aufzeichnungsmedium, und Entschlüsseln der verschlüsselten Version, um die Meßwerte, die die Bezugsunterschrift darstellen, zu regenerieren.

3. Verfahren nach Anspruch 2, bei dem das Aufzeichnungsmedium ausgewählt wird unter einem Bankschuldschein, einem Scheck, einer Bankkarte und einer Kreditkarte.

4. Verfahren nach Anspruch 2, bei dem das Aufzeichnungsmedium das weitere Aufzeichnungsmedium bildet.

5. Verfahren nach einem der vorhergehenden Ansprüche, bei dem eines der vorgewählten Merkmale die Gesamtlänge des Schriftzuges der Unterschrift innerhalb der vorbestimmten Fläche ist.

6. Verfahren nach Anspruch 5, bei dem bei der Analyse wenigstens eine der genannten ausgewerteten Pixelzahlen in bezug auf die Anzahl der Pixel normiert wird, die das Kriterium erfüllt, das dem Merkmal der Gesamtlänge des Schriftzuges zugeordnet ist.

7. Verfahren nach einem der vorhergehenden Ansprüche, bei dem wenigstens eines der vorgewählten Merkmale ein Verhältnis der Anzahl von Pixeln in der Schwarz/Weiß-Pixeldarstellung ist, die unterschiedliche Kriterien erfüllen.

8. Verfahren zum Prüfen einer angebotenen Unterschrift auf einem Trägermedium durch Vergleich mit einem Code, wobei das Verfahren die folgenden Schritte umfaßt:

a) Beleuchten einer vorbestimmten Fläche auf dem Trägermedium, wo wenigstens ein Teil einer angebotenen Unterschrift angeordnet ist,

b) Abtasten der vorbestimmten Fläche und Erzeugen erster Signale, die wenigstens einen Teil einer angebotenen Unterschrift repräsentieren,

c) Verarbeiten der ersten Signale, um zweite Signale abzuleiten, die für Merkmale des abgetasteten wenigstens einen Teils einer angebotenen Unterschrift kennzeichnend sind, wobei der Verarbeitungsschritt das Erzeugen eines schwarz/weißen Pixelmusters enthält,

d) Eingeben eines Codes, der für eine echte Unterschrift kennzeichnend ist,

e) Erzeugen dritter Signale aus dem eingegebenen Code,

f) Vergleichen der zweiten Signale mit den dritten Signalen, und

g) Anzeigen des Vergleichsergebnisses, dadurch gekennzeichnet, daß im Verarbeitungsschritt eine Schwarz/Weiß-Pixeldarstellung des abgetasteten wenigstens einen Abschnitts der angebotenen Unterschrift erzeugt und anschließend einer Analyse unterworfen wird, wobei die Analyse die Schritte enthält:

h) Analysieren eines jeden aus einer Mehrzahl vorgewählter Merkmale der abgetasteten Unterschrift durch Auswerten der Anzahl von Pixeln in der Schwarz/Weiß-Pixeldarstellung, die Kriterien erfüllen, die dem entsprechenden Merkmal zugeordnet sind, und

i) Skalieren einer jeden der genannten Anzahl Pixel, um einen Meßwert für jedes der vorgewählten Merkmale zu erzeugen,

wobei die Meßwerte die zweiten Signale sind und die dritten Signale Meßwerte sind, die durch Analyse der echten Unterschrift abgeleitet werden.

9. Verfahren nach Anspruch 8, bei dem das Trägermedium einen maschinenlesbaren Code trägt, der die echte Unterschrift repräsentiert, und der Eingabeschritt weiterhin die Abtastung des Trägermediums umfaßt, um Signale zu erzeugen, die den Code repräsentieren.

10. Verfahren nach Anspruch 9, bei dem mehrere maschinenlesbare Codes auf dem Trägermedium angeordnet sind, wobei der Abtastschritt das Erzeugen von Signalen umfaßt, die jeden der Codes darstellen und der Erzeugungsschritt das Erzeugen dritter Signale und vierter Signale umfaßt, die jeweils Meßwerte für jeden der Codes sind, und der Vergleichschritt das Vergleichen der zweiten Signale sowohl mit den dritten Signalen und den vierten Signalen umfaßt.

11. Verfahren nach Anspruch 10, bei dem die Abtastschritte das Vorbeileiten des Trägermediums an einer einzigen Abtasteinrichtung umfassen, um sequentiell die angebotene Unterschrift und die Vielzahl der Codes abzutasten.

12. Verfahren nach Anspruch 8, bei dem eines der genannten Vielzahl von vorgewählten Merkmalen die Gesamtlänge des Schriftzuges der Unterschrift innerhalb der vorbestimmten Fläche ist.

13. Verfahren nach Anspruch 12, bei dem in Analysierschritt wenigstens eine der genannten Anzahl Pixel in bezug auf die Anzahl Pixel normiert wird, die Kriterien befriedigen, die dem Merkmal der Gesamtlänge des Schriftzuges zugeordnet sind.

14. Verfahren nach Anspruch 8, bei dem wenigstens eines der genannten vorgewählten Merkmale ein Verhältnis der Anzahl Pixel in der Schwarz/Weiß-Pixeldarstellung ist, die unterschiedliche Kriterien befriedigen.

**Revendications**

1. Procédé de vérification d'une signature présentée, comprenant les étapes suivantes:

a) l'éclairement d'une zone prédéterminée sur un support, dans laquelle une partie au moins d'une signature de référence est disposée,

b) la lecture de la zone prédéterminée et la formation de premiers signaux représentant ladite partie au moins d'une signature de référence,

c) le traitement des premiers signaux afin que des seconds signaux représentatifs des caractéristiques de ladite partie lue au moins d'une signature de référence soient formés l'étape de traitement comprenant la création d'un premier dessin de points en noire et blanc,

d) l'éclairement d'une zone prédéterminée sur un support supplémentaire dans laquelle une partie au moins d'une signature présentée est disposée,

e) la lecture de la zone prédéterminée sur le support supplémentaire et la formation de troisième signaux représentant ladite partie au moins d'une signature présentée,

f) le traitement des signaux afin que des quatrièmes signaux représentatifs de caractéristiques de ladite partie lue au moins d'une signature présentée soeint formés l'étape de traitement comprenant la création d'un second dessin de points en noir et blanc,

g) la comparaison des seconds et des quatrièmes signaux, et

h) l'indication du résultat de la comparaison,

caractérisé en ce que, dans chaque étape de traitement, une représentation de points en noire et blanc de ladite partie lue au moins d'une signature est formée et est soumise ensuite à une analyse, l'analyse comprenant les étapes suivantes:

i) l'analyse de chacune de plusieurs caractéristiques prédéterminées de la signature lue par évaluation du nombre de points dans la représentation de points en noir et blanc qui satisfont aux critères associées à la caractéristique respective, et

j) le changement d'échelle de chacun des nombres de points afin qu'une valeur d'une mesure soit formée pour chacune des caractéristiques prédéterminées,

les valeurs des mesures obtenues pour la signature de référence étant constituées par les seconds signaux et les valeurs des mesures produites pour la signature présentée étant les quatrièmes signaux.

2. Procédé selon la revendication 1, comprenant en outre les étapes de formation d'une version chiffrée des valeurs des mesures représentant la signature de référence, l'enregistrement de la version chiffrée des valeurs des mesures de référence sur un support sous forme lisible par une machine, de lecture de la version chiffrée des valeurs des mesures de référence sur le support, et de déchiffrage de la version chiffrée afin que les valeurs des mesures représentant la signature de référence soient régénérées.

3. Procédé selon la revendication 2, dans lequel le support est choisi parmi une fiche de débit de banque, un chèque, une carte bancaire et une carte de crédit.

4. Procédé selon la revendication 2, le support constitue le support supplémentaire.

5. Procédé selon l'une quelconque des revendications précédentes dans lequel l'une des caractéristiques prédéterminées est la longueur totale de la ligne d'encre de la signature dans la zone prédéterminée.

6. Procédé selon la revendication 5, dans lequel l'étape d'analyse de l'un au moins des nombres évalués de points est normalisé par rapport au nombre de points satisfaisant aux critères associés à la longueur totale de la caractéristique de ligne d'encre.

7. Procédé selon l'une quelconque des revendications précédentes, dans lequel l'une au moins des caractéristiques prédéterminées est un rapport des nombres de points de la représentation de points en noir et blanc satisfaisant à différentes critères.

8. Procédé de vérification d'une signature présentée sur un support par comparaison avec un code, le procédé comprenant les étapes suivantes:

a) l'éclairement d'une zone prédéterminée sur le support dans laquelle une partie au moins d'une signature présentée est disposée,

b) la lecture de la zone prédéterminée et la formation de premiers signaux représentant ladite partie au moins d'une signature présentée,

c) le traitement des premiers signaux afin que des seconds signaux représentatifs de caractéristiques de ladite partie lue au moins d'une signature présentée soient obtenus, l'étape de traitement comprenant la création d'un dessin de points en noir et blanc,

d) l'introduction d'un code représentatif d'une signature véritable,

e) la création de troisièmes signaux à partir du code introduit,

f) la comparaison des seconds signaux avec les troisièmes signaux, et

g) l'indication du résultat de la comparaison,

caractérisé en ce que, dans l'étape de traitement, une représentation de points en noir et blanc de ladite partie lue au moins de la signature présentée est formée et est ensuite soumise à une analyse, l'analyse comprenant les étapes suivantes:

h) l'analyse de chacune de plusieurs caractéristiques prédéterminées de la signature lue par évaluation du nombre de points de la représentation de points en noir et blanc qui satisfont aux critères associés à la caractéristique respective, et

i) le changement d'échelle de chacun des nombres de points afin qu'une valeur d'une mesure soit formée pour chacune des caractéristiques prédéterminées,

les valeurs de mesures constituant les seconds signaux, et

en ce que les troisièmes signaux sont des valeurs des mesures dérivées par analyse de la signature véritable.

9. Procédé selon la revendication 8, dans lequel le support porte un code lisible par une machine, représentant la signature véritable, et l'étape d'introduction comprend la lecture supplémentaire du support afin que des signaux représentant le code soient formés.

10. Procédé selon la revendication 9, dans lequel plusieurs codes lisibles par une machine sont disposés sur le support, l'étape de lecture comprend la formation de signaux représentant chacun des codes, et l'étape de création comprend la création de troisièmes signaux et de quatrièmes signaux qui sont des valeurs respectives des mesures correspondant à chacun des codes, et l'étape de comparaison comprend la comparaison des seconds signaux à la foiu aux troisièmes et aux quatrièmes signaux.

11. Procédé selon la revendication 10, dans lequel les étapes de lecture comprennent la circulation du support devant un dispositif unique de lecture afin que la signature représentée et les codes soient lus séquentiellement.

12. Procédé selon la revendication 8, dans lequel l'une des caractéristiques prédéterminées est la longueur totale de la ligne d'encre de la signature dans la zone prédéterminée.

13. Procédé selon la revendication 12, dans lequel, au cours de l'étape d'analyse, l'un au moins des nombres de points est normalisé par rapport au nombre de points satisfaisant aux critères associés à la longueur totale de la caractéristique de ligne d'encre.

14. Procédé selon la revendication 8, dans lequel l'une au moins de caractéristiques prédéterminées est le rapport des nombres de points de la représentation de points en noir et blanc satisfaisant à différents critères.

TRANSPORT LAMP CONTROL (INTENSITY)

45

10

CODE 'A'

27

12

11

V1 V2

TRANSPORT MECHANISM

CODE 'B'

LAMP POWER SUPPLIES

CHEQUE MOTION

SIG. BOX

10a

14

13

16

15

VIDEO OUTPUT

CLOCK Ø1

CLOCK Ø2

TYPICAL ARRAY DRIVE SIGNALS

SCAN

VIDEO CLOCK

FIG. 1.

EP 0 127 478 B1

EP 0 127 478 B1

**FIG. 2.**

CHEQUE
MOTION

$$V_O(s) \doteq V_i(s) \frac{1}{1+ST} \qquad T \doteq Rc$$

**FIG. 4.**

2

Fig.3A.

FIG.3B.

EP 0 127 478 B1

```
          ┌──────────────┐
          │    ENTER     │
          │  SWITCH ON   │
          └──────────────┘
                 │
          ┌──────────────┐
          │     SELF     │────── 50
          │     TEST     │
          └──────────────┘
                 │
              ╱──────╲        YES
             ╱ FAULT ? ╲─────────────┐
             ╲         ╱             │
              ╲──────╱               │
                 │ NO        53      │
          ┌──────────────┐           │
          │  INTERROGATE │           │
          │VIDEO DATA BUFFER│        │
          └──────────────┘           │
                 │                   │
       NO     ╱──────╲               │
    ┌────────╱ CHEQUE ╲              │
    │        ╲IN PLACE ╱             │
    │         ╲   ?  ╱               │
    │          ╲────╱                │
    │             │ YES      54      │
    │     ┌──────────────────┐       │
    │     │  SELF TEST CLEAR │       │
    │     │ RHM CLEAR DISPLAY│       │
    │     │SET INITIAL CONDITIONS│   │
    │     │ LAMP TO HI INTENSITY│    │
    │     │SET REFERENCE LEVEL│      │
    │     │  RESET TIMEOUT   │       │
    │     └──────────────────┘       │
    │             │                  │
    │     ┌──────────────┐           │
    │     │  INTERROGATE │           │
    │     │VIDEO DATA BUFFER│        │
    │     └──────────────┘           │
    │             │      55          │
    │          ╱──────╲     NO        │
    │         ╱ CHEQUE ╲──────────────┤
    │         ╲IN PLACE ╱             │
    │          ╲   ?  ╱               │
    │           ╲────╱                │
    │             │ YES               │
    │          ╱──────╲               │
    │         ╱ CHEQUE ╲   NO          │
    │        ╱SCAN MARKER╲────────────┤
    │        ╲SEEN WITHIN╱            │
    │         ╲TIME LIMITS╱           │
    │          ╲   ?   ╱              │
    │           ╲─────╱               │
    │             │ YES       56      │
    │     ┌──────────────┐            │
    │     │  INTERROGATE │            │
    │     │VIDEO DATA BUFFER│         │
    │     └──────────────┘            │
    │             │                   │
    │     ┌──────────────┐            │
    │     │ PLACE VIDEO DATA│         │
    │     │  IN MEMORY   │            │
    │     └──────────────┘            │
    │             │                   │
    │   NO     ╱──────╲               │
    └─────────╱256 SCANS╲             │
             ╲COMPLETE  ╱             │
              ╲   ?   ╱               │
               ╲────╱                 │
                 │ YES                │
```

*FIG.5A.*

**58** DELAY 10 SCANS

**59** RESET REFERENCE LEVEL

**60** INTERROGATE VIDEO BUFFER

**61** CHEQUE IN PLACE OCR CHARACTERS CORRECT SIZE ? — NO

YES

**62** OCR 20 CHARACTERS CAPTURED ? — NO

YES

**63** DECODE OCR VIDEO DATA INTO 2 × 10 DIGITS

**64** DECRYPT 2 × 10 DIGITS IN 2 SETS OF STANDARD MEASURES "A","B"

**65** PROCESS SIGNATURE VIDEO DATA INTO ACTUAL MEASURES 'M'

**66** COMPARE 'M' WITH 'A' AND 'B' AND GENERATE 'K' FOR BOTH CASES

**67** SELECT VALUE OF 'K' WHICH GIVES BEST MATCH

**51** ILLUMINATE FAULT LIGHT (RED) FOR TIME OUT PERIOD

INTIATE TIMEOUT PERIOD 'T'

**68** IS BEST K > ST — YES

NO

DISPLAY ON ALPHA/ NUMERIC DISPLAY BEST VALUE 'K' FOR TIMEOUT

LAMP TO LO INTENSITY END OF TIMEOUT PERIOD

ILLUMINATE ACCEPT LIGHT (GREEN) FOR TIMEOUT PERIOD

**52** ILLUMINATE REJECT LIGHT (AMBER) FOR TIMEOUT PERIOD

*FIG.5B.*

```
              ┌─────────────────┐  70
          ───▶│    DECRYPT      │
              │      OCR        │
              │    CHAR ?       │
              └────────┬────────┘
                       │
              ┌────────▼────────┐  71
              │    PRODUCE      │
              │    VECTOR       │
              │    VALUES       │
              └────────┬────────┘
                       │
              ┌────────▼────────┐
              │   STORE OCR     │
              │ VECTOR VALUES   │
              │  "A" AND "B"    │
              └────────┬────────┘
                       │
              ┌────────▼────────┐  75
              │    ANALYSIS     │
              │   OF BLACK      │
              │    PIXELS       │
              └────────┬────────┘
                       │
              ┌────────▼────────┐  76
              │     DERIVE      │
              │   SIGNATURE     │
              │   FEATURES      │
              └────────┬────────┘
                       │
              ┌────────▼────────┐  77
              │    ALLOCATE     │
              │    MEASURE      │
              │    VALUES       │
              └────────┬────────┘
                       │
          ┌────────────▼────────────┐  78
          │ COMBINE USING ALOGORITHM │
          │  TO DERIVE RESULTANT     │
          │   MEASURE VECTOR         │
          │    VALUE  "M"            │
          └────────────┬────────────┘
                       │
          ┌────────────▼────────────┐  79
          │  COMPARE RESULTANT       │
          │ VECTOR VALUE "M"         │
          │  WITH "A" AND "B"        │
          └────────────┬────────────┘
                       │
                       ▼
                     "K"
```

FIG.6.

7